Europäisches Patentamt

European Patent Office

Office européen des brevets

(11) Publication number: **0 158 486**
**B1**

# EUROPEAN PATENT SPECIFICATION

(45) Date of publication of patent specification: **28.12.88**

(51) Int. Cl.⁴: **E 21 B 43/22,** E 21 B 43/24, C 07 C 143/34

(21) Application number: **85302175.6**

(22) Date of filing: **28.03.85**

(54) Stable forms of dialkylaromatic sulphonates.

(30) Priority: **03.04.84 US 596476**

(43) Date of publication of application:
**16.10.85 Bulletin 85/42**

(45) Publication of the grant of the patent:
**28.12.88 Bulletin 88/52**

(84) Designated Contracting States:
**BE DE FR GB IT NL**

(56) References cited:
**FR-A-2 521 636**
**US-A-3 799 263**
**US-A-3 885 626**
**US-A-4 086 964**

(73) Proprietor: **Sun Refining and Marketing
Company
1801 Market Street
Philadelphia, PA 19103-1699 (US)**

(72) Inventor: **Angstadt, Howard P.
490 South Old Middletown Road
Media PA. 19063 (US)**

(74) Representative: **Lewin, John Harvey et al
Elkington and Fife High Holborn House
52/54 High Holborn
London WC1V 6SH (GB)**

Courier Press, Leamington Spa, England.

## Description

This invention relates to improved surfactants useful in the recovery of oil, and to methods and compositions employing the same. More particularly, it relates to hydrolytically stable forms of dialkylaromatic sulphonates which may be used with steam in enhancing recovery of subterranean oil.

The use of aqueous flooding techniques, with or without the addition of various reagents such as surfactants, water thickeners and the like, to recover crude oil left behind in formations after the "primary" oil has been withdrawn is well established in the art. These displacement methods have been improved by the aforesaid surfactants and the like in both secondary and tertiary processes, as where a formation has already been waterflooded at least once.

Representative of the prior art compositions and methods described above are those taught in US—A 3,348,611 to Reisburg; US—A 3,885,626 to Gale et al; US—A 3,901,317 to Plummer et al; US—A 3,994,342 to Healy et al; and US—A 4,295,980 to Motz, all of which teach aqueous flooding techniques with at least one surfactant, and in some cases, with viscosity modifiers, co-surfactants or the like. Amongst the more preferred surfactants employed have been the alkyl sulphonates, and particularly the polyalkyl sulphonates such as those derived by the alkylation of toluene, xylene, and the like. Of these, the dialkyl sulphonates are most preferred.

In addition to the aforementioned aqueous flooding techniques, the art has also employed steam for secondary and tertiary oil recovery, utilizing the effect of heat to obtain heavy oil from the formations in which it is found. See, for example, US—A 3,357,487 and US—A 3,994,345.

The mechanism and effects of surfactants under these high temperatures and diverse formation conditions remain unclear, and thus make it impossible to predict from a knowledge of the effects of aqueous surfactant systems which surfactants, if any, can advantageously be employed in these steam recovery conditions. However, it is known that over a period of time these surfactants do become deactivated as a result of the loss of their sulphonate groups because of the high temperatures and other operating conditions of the steam recovery methods. It is, therefore, an object of this invention to provide surfactants, and particuarly dialkylaromatic sulphonates, which are more stable under the operating conditions of steam recovery methods than those of the prior art.

In accordance with the present invention it has been found that dialkylaromatic sulphonates obtained by conventional alkylation and sulphonation processes which are well known in the art actually comprise mixtures of meta- and para-isomers of said polyalkyl compounds, and that surprisingly, when the amount of the para-isomers in the mixture is increased, a significantly more hydrolytically stable sulphonate is obtained which is resistant to deactivation over longer periods of time.

Thus the invention provides a method of enhancing the recovery of oil from subterranean formations wherein a dialkylaromatic sulphonate surfactant is employed in a steam recovery system in which one of the alkyl groups contains 12 to 24 carbon atoms, and the other alkyl group contains 1 to 4 carbon atoms, and wherein the dialkylaromatic sulphonate comprises a mixture of para- and meta-isomers of said dialkylaromatic sulphonates, characterised in that the proportion of para-isomer in the mixture is at least 45 percent by weight of the total para- and meta-isomer mixture. This increased proportion of para-isomer is sufficient to increase the hydrolytic stability of the isomeric mixture.

This improved sulphonate composition may be used alone or in combination with co-surfactants, viscosity modifiers, hydrotropes or other additives known to those skilled in the art.

The polyalkylaromatic sulphonates of the prior art are generally prepared, as stated above, by first alkylating an alkylaromatic compound, such as toluene or xylene, with a long chain olefin or mixture of such olefins in the presence of an alkylating catalyst. This reaction, it is now known, actually provides a mixture of meta- and para-isomers of the resulting dialkylaromatic compound in which the amount of meta-isomer exceeds that of the para-isomer. This mixture is then sulphonated to provide the desired surfactant composition.

Since it is now recognized for the first time, in accordance with this invention, that by changing the ratios of these isomers to increase the amount of para-isomer there is obtained a more stable form of surfactant composition to be used in steam recovery methods, it will be recognized that this desired result may be achieved either by alkylation methods which selectively increase the amount of para-isomer, or by adding concentrated or pure para-isomer to an alkylate obtained by conventional means.

In terms of percentages of the respective isomers in the alkylate mixture, it has been found that conventional alkylates prepared by reacting a long-chain olefin with an alkylaromatic starting material generally contain about 35 to 40% para-isomer and 60 to 65% meta-isomer by weight. When this amount of para-isomer is increased by at least about 5—10 percent, i.e., is at least about 45 weight percent, and desirably as much as is feasible up to, ideally, 100 percent, the effective lifetime of the resulting sulphonate is significantly increased under steam recovery operating conditions, thereby providing increased oil recovery at lower cost.

The dialkylaromatic compounds which may be employed in the methods and composition of this invention are generally obtained by the alkylation of such alkylaromatics as toluene, ethyl benzene, cumene and the like.

The long chain alkyl moiety of the dialkylaromatic sulphonate (which may be branched or straight-chain) has from 12 to 24 carbon atoms, and most preferably an average of about 16 to 18 carbon atoms. The term "average" is thus meant to signify that mixtures of hydrocarbons may be employed wherein the weighted average is from 16 to 18 carbon atoms even though shorter or longer chain lengths may be present.

Alternatively, pure olefins in this range may also be employed. Thus, in one embodiment of the invention, the alkyl moiety may be derived from a mixture of $C_{14-18}$ α-olefin source in which the molecular weight distribution is such that the resultant alkylate side chain has 16 carbon atoms, even though lesser amounts of somewhat shorter or longer chain lengths may be present.

One preferred alkylate, having an average number of carbon atoms of about 16.2, may be derived from a wax-cracked $C_{14-18}$ α-olefin, and has the following weight distribution:

| Carbon Atoms in Side Chain | Weight Distribution (%) |
|---|---|
| $C_{14}$ | 2 |
| $C_{15}$ | 30 |
| $C_{16}$ | 30 |
| $C_{17}$ | 28 |
| $C_{18}$ | 10 |

Alternatively, the olefin may be a $C_{14-18}$ mixture derived from the polymerization of ethylene in a known manner, wherein the average alkyl group is 16.0, and wherein the mixture is further characterized by alkyl groups having even-numbered carbon atoms only. A typical weight distribution of such a mixture is as follows:

| Carbon Atoms in Side Chain | Weight Distribution (%) |
|---|---|
| $C_{14}$ | 25 |
| $C_{16}$ | 50 |
| $C_{18}$ | 25 |

Conventional alkylation methods leading to a mixture of dialkylaromatic isomers, generally in the ratio of about 40:60 of para:meta, are well-known in the art and need not be described in detail here. However, it has been found that one method for accomplishing the objectives of this invention, i.e., to increase the ratio of para- to meta-isomer in the alkylate, is to modify the operating temperatures in, for example, an HF alkylation process. Thus, it has been found that when the temperature of a known HF alkylation process is reduced from about 75 to 100°C. down to about 0 to 25°C., there is obtained in the product mixture a ratio of about 70:30 of para:meta isomers. Other methods, such as alkylation using titanium tetrachloride, are also known in the art for increasing the ratio of the para-isomer, as for example the procedure of N. M. Cullinane et al., described in *J. Chem. Soc.*, 1954, at page 2942. Also, as stated above, if desired, this ratio can be increased by simply adding more para-isomer to the alkylate, or less desirably, separating and removing as much of the meta-isomer from a conventional alkylate as is feasible.

After the desired ratio of para- to meta-isomer is obtained, the alkylate may then be sulphonated by methods well-known in the art, and the resulting more highly stable form of polyalkylaromatic sulphonate used in the process of this invention.

The unexpected superior hydrolytic stability of the para-isomer of dialkylsulphonates is illustrated by the data in Example 1.

Example 1

A series of sulphonate decomposition reactions was carried out in a 300-ml Parr stainless steel reactor equipped with a sampling tube, pressure relief valve, pressure gauge and thermowell. The reactor was heated via an external proportionating heater, and samples were withdrawn through a coiled 3.2 mm (⅛-inch) stainless steel tube immersed in an ice-bath, thereby providing only condensed samples. This system was purged between samples. The reactor was charged with 200—220 mls of 1% (wt.) aqueous surfactant solution and the entire system swept with nitrogen. The sulphonate solutions were prepared in deionized water; samples were analyzed in triplicate for surfactant by HPLC.

Following the above procedure, the rate of desulphonation of p-2-hexadecyl toluene sulphonate was compared with m-2-hexadecyl toluene sulphonate at 299°C and buffered at pH—4. The following results were obtained.

TABLE 1

| 2-m-Tolyhexadecane | | 2-p-Tolydexadecane | |
| --- | --- | --- | --- |
| Time (hrs.) | Activity (%) | Time (hrs.) | Activity (%) |
| 0 | 0.759 | 0 | 1.13 |
| 1 | 0.707 | 1 | 1.14 |
| 10.05 | 0.517 | 3.0 | 1.02 |
| 35.50 | 0.440 | 5.0 | 0.98 |
| 59.33 | 0.310 | 84.5 | 1.13 |
| 65.36 | 0.211 | 113.9 | 1.11 |
| | | 156.8 | 1.09 |
| | | 280.3 | 1.05 |

Thus, it is seen that the para-isomer possesses greater stability against desulphonation than does the meta-isomer.

Example 2

A commercially prepared $C_{14-18}$ alkyltoluene sulphonate mixture in which the orientation of the alkyl groups was 60% meta-isomer and 40% para-isomer was subjected to the desulphonation conditions described in the previous example. After 42 hours, the reaction was stopped and the hydrocarbon layer arising from the desulphonation reaction was isolated and analyzed by capillary gas chromatography. This material was more than 90% of the meta-oriented alkyltoluene. Thus, the more rapid hydrolysis of the meta-dialkyl aromatic sulphonate isomer in a commercial mixture is established.

When a similar experiment is carried out using a mixture of dialkyl sulphonates having a predominate para-isomer composition, the time required to attain the same degree of hydrolysis is always greater than when the meta-isomer is the principal component, thereby allowing the surfactant greater lifetime in the reservoir, resulting in better oil recoveries.

## Claims

1. A method of enhancing the recovery of oil from subterranean formations wherein a dialkylaromatic sulphonate surfactant is employed in a steam recovery system, in which one of the alkyl groups contains 12 to 24 carbon atoms, and the other alkyl group contains 1 to 4 carbon atoms, and wherein the dialkylaromatic sulphonate comprises a mixture of para- and meta-isomers of said dialkylaromatic sulphonate, characterised in that the proportion of para-isomer in the mixture is at least 45 percent by weight of the total para- and meta-isomer mixture.

2. A method according to Claim 1, wherein the dialkylaromatic sulphonate is an alkyltoluene sulphonate, said alkyl group having from 14 to 24 carbon atoms.

3. A method according to Claim 2, wherein the dialkylaromatic sulphonate is a $C_{14-18}$ alkyltoluene sulphonate, said $C_{14-18}$ alkyl group having an average of about 16 carbon atoms.

4. A method according to any of Claims 1 to 3, wherein the surfactant is accompanied by a cosurfactant, a viscosity modifier, a hydrotrope, or mixtures of the same.

## Patentansprüche

1. Verfahren zur Erhöhung der Ausbeutemenge bei der Gewinnung von Öl aus unterirdischen Formationen, wobei in einem Dampf-Gewinnungssystem ein Dialkylaromatsulfonat-Tensid eingesetzt wird, in dem eine der Alkylgruppen 12 bis 24 Kohlenstoff-Atome und die andere Alkylgruppe 1 bis 4 Kohlenstoff-Atome enthält und worin das Dialkylaromatsulfonat eine Mischung der para- und der meta-Isomeren dieses Dialkylaromatsulfonats umfaßt, dadurch gekennzeichnet, daß der Anteil des para-Isomeren in der Mischung wenigstens 45 Gew.-%, bezogen auf die Gesamtmenge der para- und meta-Isomeren in der Mischung, beträgt.

2. Verfahren nach anspruch 1, worin das Dialkylaromatsulfonat ein Alkyltoluolsulfonat ist, und die Alkylgruppe 14 bis 24 Kohlenstoff-Atome aufweist.

3. Verfahren nach Anspruch 2, worin das Dialkylaromatsulfonat ein $C_{14-18}$-Alkyltoluolsulfonat ist und $C_{14-18}$-Alkylgruppe im Mittel ungefähr 16 Kohlenstoff-Atome aufweist.

4. Verfahren nach einem der Ansprüche 1 bis 3, wobei neben dem Tensid noch ein Co-Tensid, ein Viskositätsregler, eine hydrotrope Verbindung oder Mischungen der genannten Verbindungen vorliegen.

**Revendications**

1. Procédé pour renforcer la récupération du pétrole à partir de formations souterraines, au cours duquel on utilise, dans un système de récupération par la vapeur, un sulfonate dialkylaromatique tensioactif, dans lequel un des groupements alkyle renferme 12 à 24 atomes de carbone, et l'autre groupement alkyle renferme de 1 à 4 atomes de carbone, ce sulfonate dialkylaromatique comprenant un mélange de ses isomères para- et méta-, caractérisé en ce que la proportion de l'isomère para- dans le mélange est au moins égale à 45% en poids du mélange total des isomères para- et méta.

2. Procédé selon la revendication 1, où le sulfonate dialkylaromatique est un sulfonate d'alkyl toluène, dans lequel le groupement alkyle comporte de 14 à 24 atomes de carbone.

3. Procédé selon la revendication 2, où le sulfonate dialkylaromatique est un sulfonate d'alkyl-$C_{14-18}$ toluène, dont le groupement alkyle en $C_{14}$ à $C_{18}$ comporte en moyenne environ 16 atomes de carbone.

4. Procédé selon une des revendications 1 à 3, où le produit tensioactif est accompagné d'un produit co-tensioactif, d'un agent de modification de la viscosité, d'un hydrotrope, ou de leurs mélanges.